# EUROPÄISCHE PATENTSCHRIFT

(11) **EP 3 710 341 B1**
(45) Veröffentlichungstag und Bekanntmachung des Hinweises auf die Patenterteilung: **12.01.2022**
(21) Anmeldenummer: 18799536.0
(22) Anmeldetag: 09.11.2018
(51) Int. Cl.: B62D 25/00, B62D 29/00

(54) **VORRICHTUNG ZUR VERSTÄRKUNG, ABDICHTUNG ODER DÄMPFUNG EINES STRUKTURELEMENTES**
DEVICE FOR REINFORCING, SEALING OR DAMPING OF A STRUCTURAL ELEMENT
DISPOSITIF DE RENFORCEMENT, D'ÉTANCHÉITÉ OU D'AMORTISSEMENT D'UN ÉLÉMENT STRUCTUREL

(30) Priorität: 15.11.2017 EP 17201942
(43) Veröffentlichungstag der Anmeldung: 23.09.2020
(73) Patentinhaber: Sika Technology AG, 6340 Baar (CH)
(72) Erfinder: CAUCHIE, Patrick, 1480 Rebecq (BE); SHEHU, Ardi, 3111 Rotselaar (BE); MEIER, Michael, 5443 Niederrohrdorf (CH); BELPAIRE, Vincent, 1180 Uccle (BE); SOUVAY, Denis, 67400 Illkirch-Graffenstaden (FR)
(74) Vertreter: Sika Patent Attorneys
(86) Internationale Anmeldenummer: PCT/EP2018/080780
(87) Internationale Veröffentlichungsnummer: WO 2019/096693

(56) Entgegenhaltungen:
- WO-A1-01/58741
- WO-A1-02/26549
- WO-A1-2004/043668
- WO-A1-2007/082677
- US-A1- 2009 085 379

## Beschreibung

Die Erfindung betrifft eine Vorrichtung zur Verstärkung, Abdichtung oder Dämpfung eines Strukturelementes sowie ein System eines verstärkten, abgedichteten oder gedämpften Strukturelementes in einem Kraftfahrzeug.

Vielfach weisen Bauelemente, wie beispielsweise Karosserien und/oder Rahmen von Transport- und Fortbewegungsmitteln, insbesondere von Fahrzeugen zu Wasser oder zu Land oder von Luftfahrzeugen, Strukturen mit Hohlräumen auf, um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzungen, die zur Korrosion der Bauelemente führen können, abgedichtet werden. Oft ist es auch wünschenswert, die Hohlräume und somit das Bauelement wesentlich zu verstärken, jedoch das geringe Gewicht beizubehalten. Oft ist es auch notwendig, die Hohlräume und somit die Bauelemente zu stabilisieren, um Geräusche, die sonst den Hohlraum entlang oder durch diesen hindurch übertragen werden würden, zu reduzieren. Viele dieser Hohlräume weisen eine unregelmässige Form oder ein enges Ausmass auf, wodurch es erschwert wird, sie richtig abzudichten, zu verstärken und zu dämpfen.

Insbesondere im Automobilbau, aber auch im Flugzeug- und Bootsbau, werden deshalb Abdichtungselemente (englisch: baffle) verwendet, um Hohlräume abzudichten und/oder akustisch abzuschotten, oder Verstärkungselemente (englisch: reinforcer) verwendet, um Hohlräume zu verstärken. Solche Verstärkungselemente sind z.B. von WO 2004/043668 bekannt.

In Fig. 1 ist eine Karosserie eines Automobils schematisch dargestellt. Die Karosserie 10 weist dabei verschiedene Strukturen mit Hohlräumen, wie beispielsweise Säulen 14 und Träger bzw. Verstrebungen 12, auf. Solche Strukturelemente 12, 14 mit Hohlräumen werden üblicherweise mit Abdichtungs- und/oder Verstärkungselementen 16 abgedichtet bzw. verstärkt.

In Fig. 2 ist schematisch ein bekanntes Konzept zum Abdichten und/oder Verstärken von solchen Strukturelementen mit Hohlräumen in Kraftfahrzeugen dargestellt. Dabei zeigt die

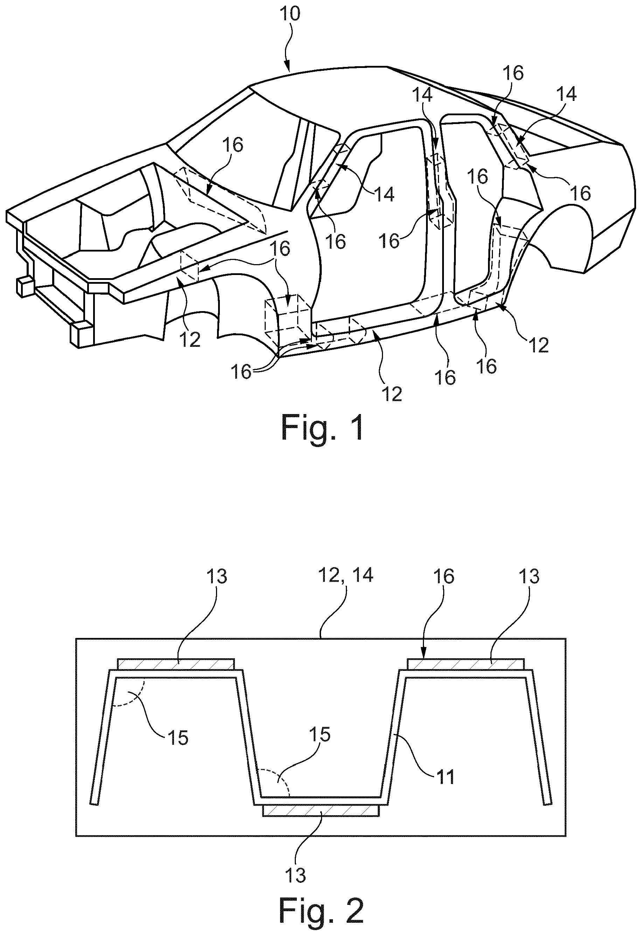

Fig. 2 ein Dämmelement 16 in einem Strukturelement 12, 14 vor einer Expansion eines expandierbaren Materials 13. In diesem Beispiel ist das expandierbare Material 13 auf Oberflächen eines Trägerelementes 11 angeordnet, welche in einer Nähe zum Strukturelement 12, 14 angeordnet sind. Das Trägerelement 11 weist in diesem Ausführungsbeispiel einen M- bzw. W-förmigen Querschnitt auf. Dadurch wird eine Steifigkeit des Trägerelementes 11 erhöht.

Dieses Trägerelement 11 bzw. das Dämmelement 16 gemäss dem Stand der Technik ist im Querschnitt derart ausgebildet, dass es auf einfache Art und Weise im Spritzgussverfahren hergestellt werden kann. Hierzu sind benachbarte Flächen des Trägerelementes 11 mit einem Winkel 15 ausgebildet, welcher geringfügig grösser als 90° ist. Durch eine solche Ausgestaltung des Querschnittes des Trägerelementes 11 kann das spritzgegossene Trägerelement 11 einfach von der Form der Spritzgussmaschine abgezogen werden.

Eine Oberfläche des Trägerelementes 11, welche jeweils einer Innenseite des Strukturelementes 12, 14 zugewandt ist, weist typischerweise eine schachbrettartige Form auf. Dabei kann das Verbindungsmaterial bzw. das expandierbare Material 13 jeweils nur auf Flächen angeordnet werden, welche in der Nähe des Strukturelementes 12, 14 angeordnet sind.

Nachteilig an solchen Dämmelementen 16 ist es, dass das Trägerelement 11 nicht auf optimale Art und Weise mit dem Strukturelement 12, 14 verbunden werden kann, weil hierzu nicht genügend Oberflächen des Trägerelementes 11 zur Verfügung stehen, welche sich in der Nähe des Strukturelementes 12, 14 befinden und sich dadurch zur Anbringung von Verbindungsmaterial 13 eignen.

Aus WO 02/26549 A1, US 2009/085379 A1, WO 2004/043668 A1, WO 2007/082677 und WO 01/58741 A1 sind jeweils solche Dämmelemente gemäss obiger Beschreibung offenbart.

Diese Aufgabe wird gelöst durch eine Vorrichtung zur Verstärkung, Abdichtung oder Dämpfung eines Strukturelementes in einem Kraftfahrzeug, wobei die Vorrichtung umfasst: einen Träger, welcher mehrere Zellen hat, wobei die Zellen jeweils einen Hohlraum umschliessen, wobei der Hohlraum jeweils in jede Richtung zumindest teilweise durch Wände begrenzt ist, und wobei die Zellen jeweils eine Ausdehnung in einer Länge, einer Höhe und einer Breite zwischen 5 mm und 100 mm haben, wobei eine Aussenfläche des Trägers durch einen Klebstoff mit dem Strukturelement verbindbar ist.

Diese Lösung hat den Vorteil, dass dadurch eine markant bessere Verbindung des Trägers mit dem Strukturelement erreicht werden kann. Durch die geschlossene bzw. im Wesentlichen geschlossene Oberfläche des Trägerelementes bietet sich die Möglichkeit, Klebstoff flächendeckend und auf allen Seiten des Trägers anzuordnen und somit den Träger mit dem Strukturelement besser zu verbinden. Dadurch können wesentlich bessere Verstärkungen von Hohlräumen und/oder Abdichtungen von Hohlräumen und/oder Dämpfungen von Hohlräumen erzielt werden im Vergleich zu Vorrichtungen gemäss dem Stand der Technik.

Ein Kerngedanke der vorliegenden Erfindung besteht darin, dass durch den Aufbau des Trägers mit mehreren Zellen ein mechanisch starker Träger bereitgestellt werden kann, welcher viel Anbindungsfläche für Klebstoff bietet, um den Träger mit dem Strukturelement zu verbinden. Durch das Vorsehen von mehreren Zellen, welche jeweils einen Hohlraum umschliessen, kann der Träger gewissermassen modular aufgebaut werden. Dadurch kann ein solcher Träger der jeweiligen Situation ideal angepasst werden.

Das Vorsehen von Zellen in der angegebenen Grössenordnung bietet den Vorteil, dass dadurch einerseits leichte Träger realisierbar sind und andererseits Träger mit einer hohen mechanischen Belastbarkeit hergestellt werden können.

In einer beispielhaften Weiterbildung haben die Zellen jeweils eine Ausdehnung in einer Länge, einer Höhe und einer Breite zwischen 10 mm und 80 mm, bevorzugt zwischen 15 mm und 70 mm, besonders bevorzugt zwischen 20 mm und 60 mm.

In einer beispielhaften Ausführungsform hat der Träger zumindest vier Zellen. In einer beispielhaften Weiterbildung hat der Träger zumindest sechs, bevorzugt zumindest acht, besonders bevorzugt zumindest zehn Zellen.

Das Vorsehen von mehreren Zellen zur Bildung des Trägers hat den Vorteil, dass dadurch ein modular aufgebauter Träger hergestellt werden kann, welcher eine hohe mechanische Belastbarkeit aufweist. Dabei können beispielsweise innen liegende Wände der Zellen als Verstärkungsrippen fungieren. Aussen liegende Wände der Zellen, welche eine Aussenfläche des Trägers bilden, bieten hingegen eine Anbindungsfläche zur Verbindung des Trägers mit dem Strukturelement.

In einer beispielhaften Ausführungsform schliessen die Wände der Zellen die Aussenfläche des Trägers zumindest zu 70%, bevorzugt zu mindestens 80%, besonders bevorzugt zu mindestens 90%.

Das Vorsehen einer geschlossenen bzw. im Wesentlichen geschlossenen Aussenfläche des Trägers bietet den Vorteil, dass dadurch eine möglichst grosse Fläche zur Anbindung des Trägers an das Strukturelement bereitgestellt werden kann.

In einer beispielhaften Ausführungsform schliessen die Wände der Zellen eine Zellenhülle zumindest zu 70%, bevorzugt zumindest zu 80%, besonders bevorzugt zu mindestens zu 90%.

Das Vorsehen von geschlossenen bzw. im Wesentlichen geschlossenen Zellen bietet den Vorteil, dass dadurch eine möglichst hohe mechanische Belastbarkeit gewährleistet werden kann. Dabei können beispielsweise Zellwände, welche eine Aussenfläche des Trägers bilden, mehr geschlossen sein als Zellwände, welche im Inneren des Trägers liegen.

In einer vorteilhaften Weiterbildung sind Wände der Zellen, welche in einem Inneren des Trägers liegen, zu weniger als 70%, bevorzugt zu weniger als 60%, besonders bevorzugt zu weniger als 50% geschlossen.

In einer weiteren bevorzugten Weiterbildung sind Wände der Zellen, welche eine Aussenfläche des Trägers bilden, zumindest zu 85%, bevorzugt zumindest zu 90%, besonders bevorzugt zumindest zu 95% geschlossen.

In einer beispielhaften Ausführungsform sind die Zellen in nur einer Lage angeordnet.

In einer alternativen Ausführungsform sind die Zellen in zwei, drei, vier oder fünf Lagen angeordnet.

In einer alternativen Ausführungsform sind die Zellen in zumindest zwei, zumindest drei, zumindest vier oder zumindest fünf Lagen angeordnet.

In einer beispielhaften Ausführungsform sind eine Anordnung und eine Formgebung der Zellen an einen für die Vorrichtung vorgesehenen Lastfall angepasst.

In einer beispielhaften Ausführungsform sind die Zellen unterschiedlich dimensioniert.

In einer beispielhaften Ausführungsform sind die Zellen unregelmässig geformt.

In einer beispielhaften Ausführungsform ist eine Stärke der Wände der Zellen an einen für die Vorrichtung vorgesehenen Lastfall angepasst.

In einer beispielhaften Ausführungsform beträgt eine Dicke der Wände der Zellen zwischen 1 und 8 mm, bevorzugt zwischen 1,5 und 7 mm, bevorzugt zwischen 2 und 6 mm.

In einer beispielhaften Ausführungsform haben Wände der Zellen, welche in einem Inneren des Trägers angeordnet sind, eine grössere Wandstärke als Wände der Zellen, welche eine Aussenfläche des Trägers bilden.

Das Vorsehen von Zellen, welche in ihrer Ausgestaltung an einen jeweiligen Lastfall angepasst sind, hat den Vorteil, dass dadurch gewichtsoptimierte Träger bereitgestellt werden können, welche, bezogen auf ihr Gewicht, eine hohe mechanische Belastbarkeit aufweisen.

In einer beispielhaften Ausführungsform ist eine Stärke der Wände der Zellen ungleichmässig ausgebildet.

In einer beispielhaften Weiterbildung ist ein Querschnitt der Wände der Zellen konkav ausgebildet.

In einer alternativen Weiterbildung ist ein Querschnitt der Wände der Zellen sich in eine Richtung verjüngend ausgebildet.

In einer beispielhaften Ausführungsform haben die Zellen Aussparungen.

In einer beispielhaften Weiterbildung sind die Aussparungen rund, oval, rechteckig, quadratisch oder unregelmässig geformt.

In einer beispielhaften Weiterbildung weisen die Zellen an zumindest zwei Wänden zumindest eine Aussparung auf.

In einer beispielhaften Weiterbildung sind die Aussparungen in Wänden angeordnet, welche nicht miteinander benachbart sind.

Das Vorsehen von Aussparungen in den Wänden der Zellen hat den Vorteil, dass dadurch einerseits die Zellen gewichtsoptimiert werden können, und dass dadurch andererseits eine Durchflussmöglichkeit für die Tauchlackierungsflüssigkeit gewährleistet werden kann.

In einer beispielhaften Ausführungsform enthält der Träger Metall, Stahl, Aluminium, Magnesium, Kunststoff, faserverstärkten Kunststoff (insbesondere karbonfaserverstärkter Kunststoff oder glasfaserverstärkter Kunststoff), Organo Sheet oder eine Kombination dieser Materialien.

In einer beispielhaften Ausführungsform sind alle Wände des Trägers aus demselben Material gebildet.

Der hier vorgeschlagene Träger kann beispielsweise in einem 3D-Druckverfahren hergestellt werden.

Die eingangs gestellte Aufgabe wird weiterhin gelöst durch ein System eines verstärkten, abgedichteten oder gedämpften Strukturelementes in einem Kraftfahrzeug, wobei das System umfasst: ein Strukturelement; einen Träger, wobei der Träger im Strukturelement angeordnet ist; und einen Klebstoff, wobei der Klebstoff den Träger und das Strukturelement miteinander verbindet.

Dabei ist der Träger mit dem hier beschriebenen zellenartigen Aufbau ausgebildet.

In einer beispielhaften Ausführungsform hat der Klebstoff eine Expansionsrate von weniger als 500% oder ist der Klebstoff ein nicht expandierbarer Klebstoff.

Wenig expandierbare oder nicht expandierbare Materialien bieten den Vorteil, dass dadurch der Klebstoff bei der Expansion nicht zu sehr an mechanischer Stabilität verliert. Grundsätzlich wird ein Material mechanisch schwächer, je stärker das Material expandiert wird.

Beispiele für nicht oder wenig expandierbare Klebstoffe sind insbesondere SikaReinforcer^{®}-940 oder SikaPower^{®}-497. Dabei ist SikaReinforcer^{®}-940 ein Beispiel für ein expandierbares Material, wobei SikaPower^{®}-497 ein Beispiel für ein nicht expandierbares Material ist.

Der Ausdruck "nicht expandierbar" bedeutet im Zusammenhang dieser Erfindung, dass ein Material sein Volumen nicht mehr oder weniger als 10% verändert bei den für das Material vorgesehenen Prozessschritten. Beispielsweise können nicht expandierbare Klebstoffe bei einer Aushärtung leicht schrumpfen. Eine solche Volumenveränderung bei einem Aushärten wird im Sinne dieser Anmeldung als "nicht expandierbar" betrachtet.

In einer beispielhaften Ausführungsform ist der Klebstoff durch eine Temperatur von mehr als 120° härtbar.

In einer alternativen Ausführungsform hat der Klebstoff eine Expansionsrate von mehr als 500%, bevorzugt von mehr als 1000%, besonders bevorzugt von mehr als 1500%.

Ein Beispiel für solche stärker expandierbare Klebstoffe ist insbesondere SikaBaffle^{®}-450.

In einer weiteren alternativen Ausführungsform umfasst das System einen ersten Klebstoff und einen zweiten Klebstoff, wobei die Klebstoffe unterschiedliche Eigenschaften, insbesondere hinsichtlich einer Expansion und/oder einer Aushärtung und/oder einer Anbindungsfähigkeit und/oder einer mechanischen Belastbarkeit, haben.

Einzelheiten und Vorteile der Erfindung werden im Folgenden anhand von Ausführungsbeispielen und mit Bezug auf schematische Zeichnungen beschrieben.

Es zeigen:
- Fig. 1: beispielhafte Darstellung einer Karosserie;
- Fig. 2: schematische Darstellung einer beispielhaften Vorrichtung gemäss dem Stand der Technik;

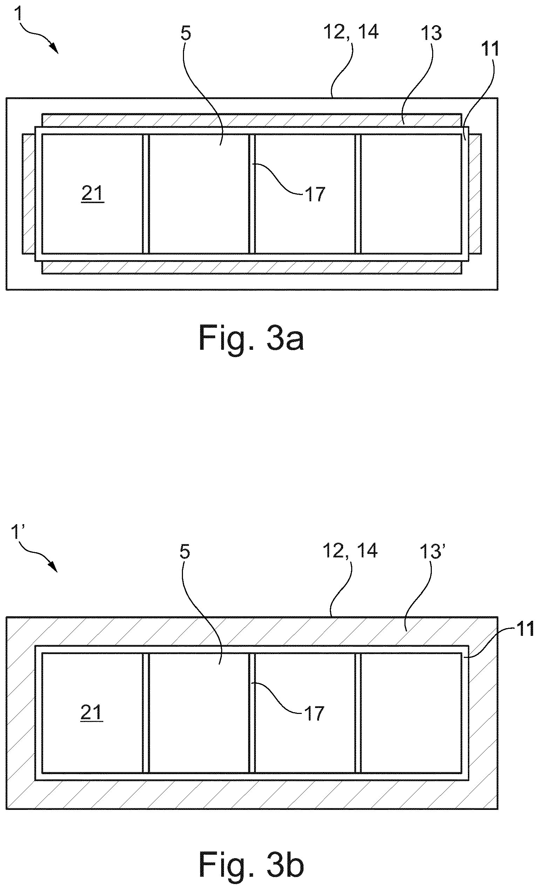

- Fig. 3a und 3b: schematische Darstellung eines beispielhaften Systems eines verstärkten, abgedichteten oder gedämpften Strukturelementes; und

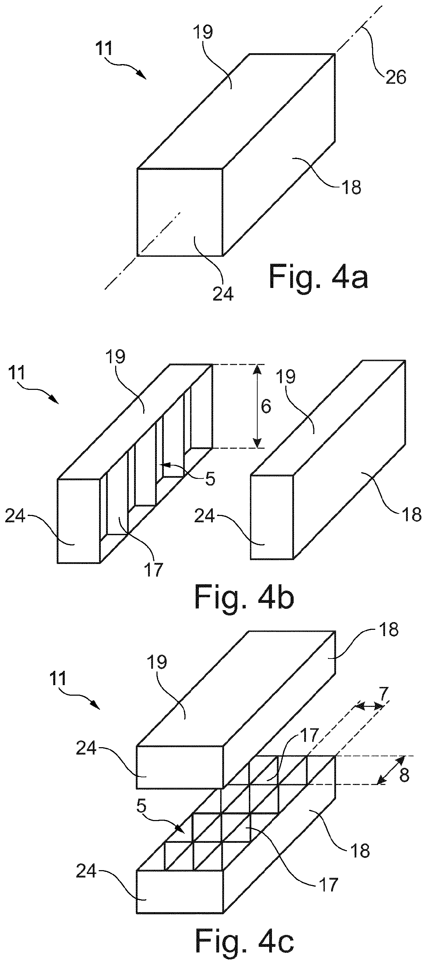

- Fig. 4a bis 11: schematische Darstellungen beispielhafter Träger.

In den Fig. 3a und 3b ist ein beispielhaftes System 1 eines verstärkten, abgedichteten oder gedämpften Strukturelementes 12, 14 dargestellt. Dabei ist in Fig. 3a eine Situation gezeigt, in welcher der Klebstoff 13 nicht expandiert ist, und in Fig. 3b ist eine Situation dargestellt, in welcher der Klebstoff 13' expandiert ist.

In diesem beispielhaften System 1 ist ein Träger 11 mit vier nebeneinander angeordneten Zellen 5 dargestellt. Dabei umschliesst jede der Zellen 5 einen Hohlraum 21. Durch die hier gezeigte nebeneinanderliegende Anordnung der Zellen 5 wirken die innenliegenden Wände der Zellen 5 als Rippen 17. Die aussen liegenden Wände der Zellen 5 dienen als Anbindungsfläche für den Klebstoff 13 zur Verbindung des Trägers 11 mit dem Strukturelement 12, 14.

In diesem Ausführungsbeispiel ist der Klebstoff 13 als expandierbarer Klebstoff ausgebildet, wobei der Klebstoff 13 vor der Expansion auf dem Träger 11 angeordnet ist. Der Träger 11 wird also mit dem Klebstoff 13 in das Strukturelement 12, 14 eingeführt, und danach wird der Klebstoff 13, beispielsweise durch eine Hitzeanwendung, expandiert, so dass der expandierte Klebstoff 13' den Träger 11 mit dem Strukturelement 12, 14 verbindet.

In alternativen Ausführungsformen (nicht dargestellt) ist der Klebstoff 13 zunächst nicht auf dem Träger 11 angeordnet, sondern wird direkt auf die Innenwände des Strukturelementes 12, 14 appliziert, oder wird in den Bereich zwischen Träger 13 und Strukturelement 12, 14 eingebracht, nachdem der Träger 11 im Strukturelement 12, 14 angeordnet ist. In solchen Fällen können Klebstoffe 13 mit anderen Viskositäten eingesetzt werden, sodass der Klebstoff 13 pumpbar bzw. extrudierbar bzw. applizierbar ist.

Die hier vorgeschlagene Vorrichtung mit dem Träger 11 kann grundsätzlich für verschiedene Klebstoffe 13 sowie für verschiedene Anbringungsverfahren dieser Klebstoffe 13 verwendet werden.

In den folgenden Figuren sind unterschiedliche beispielhafte Ausführungsvarianten des Trägers 11 dargestellt.

In den Fig. 4a bis 4c ist ein quaderförmiger Träger 11 dargestellt. Dieser Träger 11 hat eine Längsachse 26, Seitenwände 18, Deckwände 19, Vor- bzw. Rückwände 24 sowie Rippen 17. Wände 18, 19, 24 und Rippen 17 bilden dabei die Zellen 5. Die Zellen 5 haben jeweils eine Höhe 6, eine Breite 7 und eine Länge 8. In diesem Ausführungsbeispiel umfasst der Träger 11 zwölf Zellen 5, welche in einer einzigen Lage angeordnet sind.

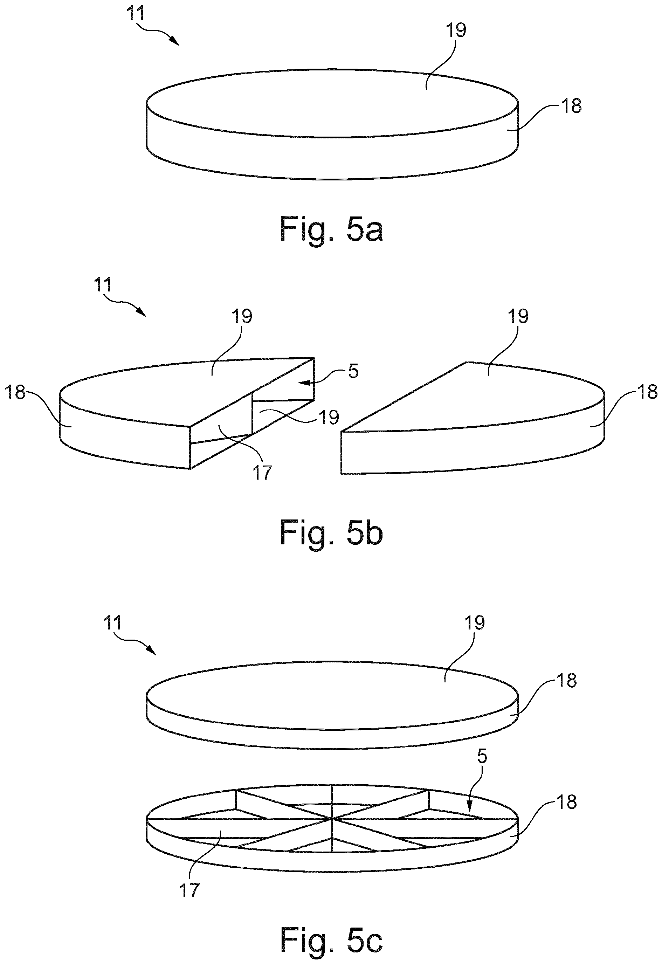

In den Fig. 5a bis 5c ist eine weitere beispielhafte Ausführungsform eines Trägers 11 dargestellt. In diesem Ausführungsbeispiel hat der Träger 11 einen kreisförmigen Grundriss. Wiederum hat der Träger 11 Deckwände 19, eine Seitenwand 18 und Rippen 17. In diesem Ausführungsbeispiel sind die Zellen 5 sektorartig ausgestaltet, wobei in diesem Ausführungsbeispiel der Träger 11 acht solche sektorartigen Zellen 5 umfasst, welche wiederum in einer einzigen Lage angeordnet sind.

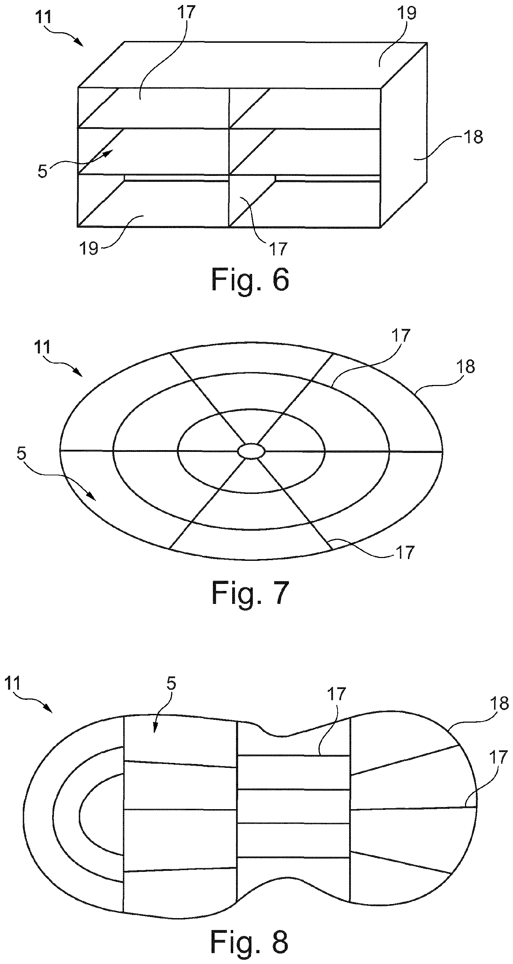

In Fig. 6 ist eine weitere beispielhafte Ausführungsform eines Trägers 11 dargestellt. In diesem Ausführungsbeispiel sind die Zellen 5 in drei übereinanderliegenden Lagen angeordnet. Somit gibt es Rippen 17, welche parallel zu den Seitenwänden 18 angeordnet sind, sowie Rippen 17, welche parallel zu den Deckwänden 19 angeordnet sind.

In Fig. 7 ist eine weitere beispielhafte Ausführungsform eines Trägers 11 dargestellt. In diesem Ausführungsbeispiel hat der Träger 11 einen ovalen Grundriss. Wiederum sind die Zellen 5 sektorartig ausgestaltet, wobei jeder Sektor aus mehreren Zellen 5 besteht.

In Fig. 8 ist eine weitere beispielhafte Ausführungsform eines Trägers 11 dargestellt. In diesem Ausführungsbeispiel hat der Träger 11 einen unregelmässig geformten Grundriss sowie auch unregelmässig geformte Zellen 5. Je nach Anforderung bzw. Lastfall des Systems 1 können kleinere und grössere Zellen 5 in unterschiedlicher Konstellation so angeordnet werden, dass ein gewichtsoptimierter Träger 11 sowie ein Träger 11 mit möglichst hoher mechanischer Belastbarkeit bereitgestellt werden kann.

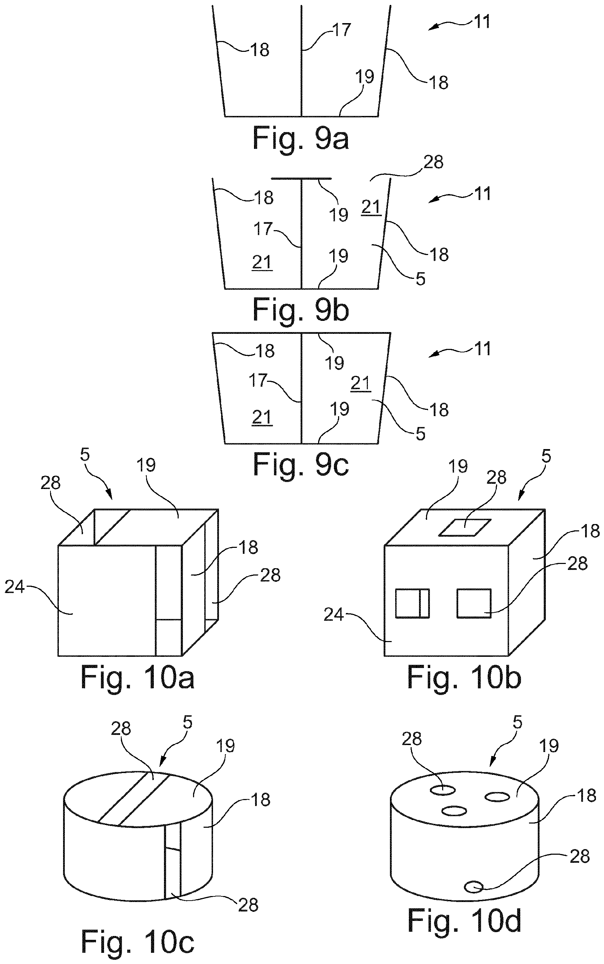

In den Fig. 9a bis 9c sind Querschnitte von Trägern 11 dargestellt. Dabei zeigt Fig. 9a einen Träger 11 gemäss dem Stand der Technik. In Fig. 9a ist nämlich kein Hohlraum 21 in jede Richtung durch Wände 17, 18, 19 begrenzt, da der Innenraum des Trägers 11 nach oben hin vollständig offen ist. Somit umfasst der Träger 11 in Fig. 9a keine Zellen im Sinne der Erfindung.

In Fig. 9b ist eine beispielhafte Ausführungsform eines Trägers 11 dargestellt. Hier sind die Hohlräume 21 jeweils in jede Richtung zumindest teilweise durch Wände 17, 18, 19 begrenzt. Dabei hat die obere Deckwand 19 eine Aussparung 28. Somit sind die Zellen 5 in diesem Ausführungsbeispiel nicht vollständig geschlossen.

In Fig. 9c ist eine weitere Variante eines Trägers 11 dargestellt. In diesem Ausführungsbeispiel sind die Hohlräume 21 jeweils in jede Richtung vollständig durch Wände 17, 18, 19 begrenzt. In diesem Ausführungsbeispiel sind demnach die Zellen 5 durch die Wände 17, 18, 19 vollständig geschlossen.

In den Fig. 10a bis 10d sind jeweils einzelne Zellen 5 dargestellt, welche verschiedene Aussparungen 28 haben. In Fig. 10a ist eine Zelle 5 dargestellt, welche in mehreren Wänden 18, 19, 24 längliche sowie rechteckige Aussparungen 28 hat. In Fig. 10b ist wiederum eine Zelle 5 dargestellt, welche rechteckige Aussparungen 28 hat. In diesem Ausführungsbeispiel sind in einer Vorderwand 24 zwei Aussparungen 28 angeordnet. In Fig. 10c ist eine zylinderförmige ausgebildete Zelle 5 dargestellt, wobei diese Zelle 5 in den Wänden 18, 19 schlitzartige Aussparungen 28 aufweist. In Fig. 10d wiederum ist eine zylinderförmige Zelle 5 dargestellt, welche in den Wänden 18, 19 runde Aussparungen aufweist.

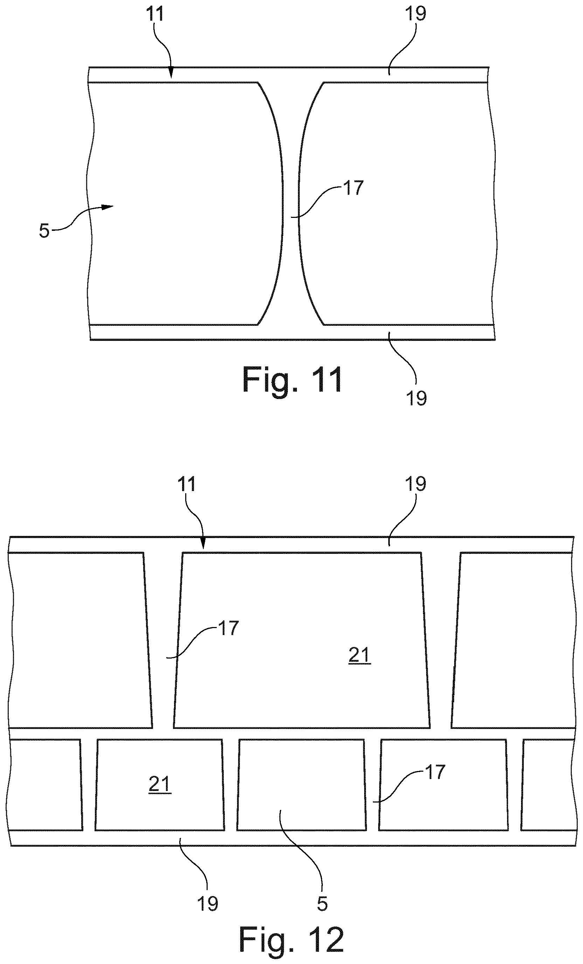

In den Fig. 11 und 12 sind jeweils Querschnitte durch einen Träger 11 dargestellt. Dabei ist in Fig. 11 ein einlagiger Träger 11 abgebildet, wobei in Fig. 12 ein Träger 11 mit zwei übereinanderliegenden Lagen dargestellt ist. Aus diesen Querschnitten wird ersichtlich, dass die Wände 18, 19, 17, 24 des Trägers 11 bezüglich ihrer Dicke verschiedenartig ausgestaltet werden können. In Fig. 11 ist beispielsweise eine Rippe 17 mit einem konkaven Querschnitt ausgestaltet. In Fig. 12 sind die Rippen 17 mit einem sich in eine Richtung verjüngenden Querschnitt ausgestaltet. Solche und andere ähnliche Ausgestaltungen der Wände 17, 18, 19, 24 erlauben es, gewichtsoptimierte Träger 11 zur Verfügung zu stellen.

### Bezugszeichenliste

- 1: System
- 5: Zelle
- 6: Höhe der Zelle
- 7: Breite der Zelle
- 8: Länge der Zelle
- 10: Karosserie
- 11: Träger
- 12: Strukturelement
- 13: Klebstoff
- 14: Strukturelement
- 15: Winkel
- 16: Vorrichtung
- 17: Rippe
- 18: Seitenwand
- 19: Deckwand
- 21: Hohlraum
- 24: Vor-Rückwand
- 26: Längsachse des Trägers
- 28: Aussparung

## Patentansprüche

1. Vorrichtung (16) zur Verstärkung, Abdichtung oder Dämpfung eines Strukturelementes (12, 14) in einem Kraftfahrzeug, umfassend:
einen Träger (11), welcher mehrere Zellen (5) hat, wobei die Zellen (5) jeweils eine Ausdehnung in einer Länge (8), einer Höhe (6) und einer Breite (7) zwischen 5 mm und 100 mm haben,
wobei eine Aussenfläche des Trägers (11) durch einen Klebstoff (13) mit dem Strukturelement (12, 14) verbindbar ist,
**dadurch gekennzeichnet, dass** die Zellen (5) jeweils einen Hohlraum (21) umschliessen, wobei der Hohlraum (21) jeweils in jede Richtung zumindest teilweise durch Wände (17, 18, 19, 24) begrenzt ist.

2. Vorrichtung nach Anspruch 1, wobei der Träger (11) zumindest vier Zellen (5) hat.

3. Vorrichtung nach einem der vorhergehenden Ansprüche, wobei die Wände (18, 19, 24) der Zellen (5) die Aussenfläche des Trägers (11) zumindest zu 70 % schliesst.

4. Vorrichtung nach einem der vorhergehenden Ansprüche, wobei die Zellen (5) in nur einer Lage angeordnet sind.

5. Vorrichtung nach einem der vorhergehenden Ansprüche, wobei eine Anordnung und eine Formgebung der Zellen (5) an einen für die Vorrichtung (16) vorgesehenen Lastfall angepasst sind.

6. Vorrichtung nach einem der vorhergehenden Ansprüche, wobei die Zellen (5) unterschiedlich dimensioniert sind und / oder wobei die Zellen (5) unregelmässig geformt sind.

7. Vorrichtung nach einem der vorhergehenden Ansprüche, wobei eine Stärke der Wände (17, 18, 19, 24) der Zellen (5) an einen für die Vorrichtung (16) vorgesehenen Lastfall angepasst sind.

8. Vorrichtung nach einem der vorhergehenden Ansprüche, wobei eine Stärke der Wände (17, 18, 19, 24) der Zellen (5) ungleichmässig ausgebildet ist.

9. Vorrichtung nach einem der vorhergehenden Ansprüche, wobei die Zellen (5) Aussparungen (28) haben.

10. Vorrichtung nach Anspruch 9, wobei die Aussparungen (28) rund, oval, rechteckig, quadratisch, oder unregelmässig geformt sind.

11. Vorrichtung nach einem der Ansprüche 9 oder 10, wobei die Zellen (5) an zumindest zwei Wänden (17, 18, 19, 24) zumindest eine Aussparung (28) aufweisen.

12. Vorrichtung nach Anspruch 11, wobei die Aussparungen (28) in Wänden (17, 18, 19, 24) angeordnet sind, welche nicht miteinander benachbart sind.

13. Vorrichtung nach einem der vorhergehenden Ansprüche, wobei der Träger (11) Metall, Stahl, Aluminium, Magnesium, Kunststoff, faserverstärkter Kunststoff, Organo Sheet, oder eine Kombination dieser Materialien enthält, und/oder wobei alle Wände (17, 18, 19, 24) des Trägers (11) aus demselben Material gebildet sind.

14. System (1) eines verstärkten, abgedichteten oder gedämpften Strukturelements (12, 14) in einem Kraftfahrzeug, das System umfassend:
- ein Strukturelement (12, 14);
- einen Träger (11) nach einem der Ansprüche 1 bis 13, wobei der Träger (11) im Strukturelement (12, 14) angeordnet ist; und
- einen Klebstoff (13, 13'), wobei der Klebstoff (13, 13') den Träger (11) und das Strukturelement (12, 14) miteinander verbindet.

15. System nach Anspruch 14, wobei der Klebstoff (13, 13') ein nicht expandierbarer Klebstoff ist oder ein expandierbarer Klebstoff ist.

## Claims

1. A device (16) for reinforcing, sealing or damping a structural element (12, 14) in a motor vehicle, comprising:
a support (11) with multiple cells (5), wherein each cell (5) has an extension in length (8), height (6), and width (7) between 5 mm and 100 mm,
wherein an outer surface of the support (11) can be connected to the structural element (12, 14) by an adhesive (13),
**characterized in that** the cells (5) each surround a cavity (21), wherein each cavity (21) is at least partially delimited by walls (17, 18, 19, 24) in each direction

2. The device as claimed in claim 1, wherein the support (11) has at least four cells (5).

3. The device as claimed in any of the preceding claims, wherein the walls (18, 19, 24) of the cells (5) close at least 70% of the outer surface of the support (11).

4. The device as claimed in any of the preceding claims, wherein the cells (5) are arranged in only one layer.

5. The device as claimed in any of the preceding claims, wherein an arrangement and form of the cells (5) are adapted to a proposed load case for the device (16).

6. The device as claimed in any of the preceding claims, wherein the cells (5) have different dimensions and/or wherein the cells (5) are irregular in form.

7. The device as claimed in any of the preceding claims, wherein a thickness of the walls (17, 18, 19, 24) of the cells (5) is adapted to a proposed load case for the device (16).

8. The device as claimed in any of the preceding claims, wherein a thickness of the walls (17, 18, 19, 24) of the cells (5) is uneven.

9. The device as claimed in any of the preceding claims, wherein the cells (5) have openings (28).

10. The device as claimed in claim 9, wherein the openings (28) are round, oval, rectangular, square or irregular in form.

11. The device as claimed in one of claims 9 or 10, wherein the cells (5) have at least one opening (28) on at least two walls (17, 18, 19, 24).

12. The device as claimed in claim 11, wherein the openings (28) are arranged in walls (17, 18, 19, 24) which are not adjacent to each other.

13. The device as claimed in any of the preceding claims, wherein the support (11) contains metal, steel, aluminum, magnesium, plastic, fiber-reinforced plastic, organic sheet material, or a combination of said materials, and/or
wherein all walls (17, 18, 19, 24) of the support (11) are made from the same material.

14. A system (1) of a reinforced, sealed or damped structural element (12, 14) in a motor vehicle, the system comprising:
- a structural element (12, 14);
- a support (11) as claimed in any of claims 1 to 13, wherein the support (11) is arranged in the structural element (12, 14); and
- an adhesive (13, 13'), wherein the adhesive (13, 13') connects the support (11) and the structural element (12, 14) together.

15. The system as claimed in claim 14, wherein the adhesive (13, 13') is a nonexpandable adhesive or an expandable adhesive.

## Revendications

1. Dispositif (16) pour le renforcement, l'étanchéification ou l'amortissement d'un élément structural (12, 14) dans un véhicule automobile, comprenant :
un support (11), qui a plusieurs cellules (5), les cellules (5) ayant chacune une étendue dans une longueur (8), une hauteur (6) et une largeur (7) comprise entre 5 mm et 100 mm,
une surface extérieure du support (11) pouvant être reliée par un adhésif (13) à l'élément structural (12, 14),
**caractérisé en ce que** les cellules (5) entourent chacune une cavité (21), la cavité (21) étant délimitée respectivement dans chaque direction au moins partiellement par des parois (17, 18, 19, 24).

2. Dispositif selon la revendication 1, dans lequel le support (11) a au moins quatre cellules (5).

3. Dispositif selon l'une quelconque des revendications précédentes, dans lequel les parois (18, 19, 24) des cellules (5) ferment au moins à 70 % la surface extérieure du support (11).

4. Dispositif selon l'une quelconque des revendications précédentes, dans lequel les cellules (5) ne sont agencées qu'en une couche.

5. Dispositif selon l'une quelconque des revendications précédentes, dans lequel un agencement et une forme des cellules (5) sont adaptés à un cas de charge prévu pour le dispositif (16).

6. Dispositif selon l'une quelconque des revendications précédentes, dans lequel les cellules (5) sont dimensionnées différemment et/ou dans lequel les cellules (5) sont formées de manière irrégulière.

7. Dispositif selon l'une quelconque des revendications précédentes, dans lequel une épaisseur des parois (17, 18, 19, 24) des cellules (5) est adaptée à un cas de charge prévu pour le dispositif (16) .

8. Dispositif selon l'une quelconque des revendications précédentes, dans lequel une épaisseur des parois (17, 18, 19, 24) des cellules (5) est configurée de manière non uniforme.

9. Dispositif selon l'une quelconque des revendications précédentes, dans lequel les cellules (5) ont des évidements (28).

10. Dispositif selon la revendication 9, dans lequel les évidements (28) sont de forme ronde, ovale, rectangulaire, carrée ou irrégulière.

11. Dispositif selon l'une quelconque des revendications 9 ou 10, dans lequel les cellules (5) comprennent au moins un évidement (28) sur au moins deux parois (17, 18, 19, 24).

12. Dispositif selon la revendication 11, dans lequel les évidements (28) sont agencés dans des parois (17, 18, 19, 24) qui ne sont pas voisines les unes des autres.

13. Dispositif selon l'une quelconque des revendications précédentes, dans lequel le support (11) contient du métal, de l'acier, de l'aluminium, du magnésium, du plastique, du plastique renforcé par des fibres, de la feuille organique, ou une combinaison de ces matériaux, et/ou
dans lequel toutes les parois (17, 18, 19, 24) du support (11) sont formées du même matériau.

14. Système (1) d'un élément structural (12, 14) renforcé, étanchéifié ou amorti dans un véhicule automobile, le système comprenant :
- un élément structural (12, 14) ;
- un support (11) selon l'une quelconque des revendications 1 à 13, le support (11) étant agencé dans l'élément structural (12, 14) ; et
- un adhésif (13, 13'), l'adhésif (13, 13') reliant le support (11) et l'élément structural (12, 14) l'un à l'autre.

15. Système selon la revendication 14, dans lequel l'adhésif (13, 13') est un adhésif non expansible ou est un adhésif expansible.
